(19) Europäisches Patentamt

European Patent Office

Office européen des brevets

(11) **EP 1 106 231 A1**

(12) **DEMANDE DE BREVET EUROPEEN**

(43) Date de publication:
**13.06.2001 Bulletin 2001/24**

(51) Int Cl.$^7$: **B01D 46/52**, B31D 5/04

(21) Numéro de dépôt: **00126469.6**

(22) Date de dépôt: **07.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **10.12.1999 FR 9915598**

(71) Demandeur: **VALEO CLIMATISATION**
**78321 La Verrière (FR)**

(72) Inventeur: **Poitier, Gérard**
**92230 Gennevilliers (FR)**

(54) **Filtre à air, procédé de réalisation d'un tel filtre et installation de mise en oeuvre**

(57) La présente invention a pour objectif de réaliser un filtre à air optimisé en termes de coûts et de temps d'installation, tout en conservant un rapport encombrement sur surface utile optimisé.

Pour atteindre ces objectifs, l'invention propose de réaliser directement une rigidification de la couche de matériau filtrant en utilisant les propriétés du type de matériau utilisé.

Selon un exemple de réalisation, le filtre à air (1) comporte au moins une structure filtrante en couche formée d'un matériau à base de fibres, et façonnée pour réaliser une zone utile filtrante (2) de type à plis (20). La zone utile (2) est réalisée sur une partie centrale de la structure filtrante entourée par une bande périphérique non façonnée (40) qui s'étend le long d'un pourtour de la zone utile (2) et sur une largeur appropriée au logement du filtre, la bande périphérique (40) présentant une rigidité sur une partie suffisante de sa longueur afin de constituer une armature de filtre.

L'invention concerne également un procédé de réalisation d'un tel filtre et une installation pour sa mise oeuvre.

FIG.1

EP 1 106 231 A1

## Description

L'invention concerne un filtre à air, un procédé destiné à réaliser un tel filtre et une installation mettant en oeuvre ce procédé. Ce type de filtre peut être intégré en particulier, mais non exclusivement, dans un circuit de climatisation de type automobile. Tous les domaines dans lesquels interviennent un conditionnement d'air ou de gaz, tels que l'habitat, l'outillage, etc., sont également dans le champ d'application de la présente invention.

D'une manière générale, un circuit de climatisation, par exemple pour un habitacle automobile, fonctionne par circulation d'un flux d'air. Ce circuit comporte généralement un filtre destiné à filtrer le flux d'air qui le traverse afin d'empêcher les germes et autres polluants de pénétrer dans cet habitacle.

De tels filtres comportent une structure filtrante qui se présente sous la forme d'une couche de matériau à fibres. Le matériau utilisé est classiquement un matériau à base de fibres, telles que des fibres de polypropylène, de polyester, de polyamide, de polycarbonate et/ou de cellulose, ces fibres étant tissées ou non tissées, par exemple entrelacées. La filtration d'air s'effectue par traversée de cette couche sous pression. Les dimensions du filtre déterminent son encombrement, tandis que sa capacité de filtration est liée à la surface utile de filtration de la couche. Aussi, dans la plupart des utilisations, et notamment dans le domaine de la climatisation automobile, le rapport dimension globale du filtre sur surface utile filtrante est rendu maximal. Pour ce faire, la structure filtrante est façonnée, par exemple par pliage ou déformation, pour augmenter la surface filtrante. De manière générale, des plis ou des ondulations parallèles sur toute la surface de la structure filtrante sont réalisés selon une forme « en accordéon », deux plis consécutifs étant réalisés en sens opposés.

Parallèlement à ces plis, et en raison de leur présence même, la structure filtrante ne possède qu'une tenue très faible, voire inexistante. Il est par conséquent nécessaire de la doter d'une armature. Celle-ci est obtenue généralement en liant la structure filtrante en couche à un cadre rigide.

L'étanchéité périphérique du filtre est alors assurée soit par ce cadre, soit par des moyens dont il est équipé, par exemple des couches supplémentaires. Le cadre est lui-même rendu solidaire d'un logement de boîtier disposé dans le circuit et dimensionné à cet effet.

La réalisation d'un tel cadre est coûteuse en temps et engendre des frais supplémentaires. En effet, elle nécessite la fabrication de pièces additionnelles et des étapes de positionnement et d'assemblage à la périphérie de la structure filtrante, en particulier sur la tranche des plis.

La présente invention a donc pour objectif de réaliser un filtre du type décrit précédemment, mais optimisé en termes de coûts et de temps d'installation, tout en conservant un rapport encombrement sur surface utile optimisé.

Pour atteindre ces objectifs, l'invention propose de réaliser directement une rigidification de la couche de matériau filtrant en utilisant les propriétés du type de matériau utilisé.

Plus précisément, l'invention a pour objet un filtre à air comportant au moins une structure filtrante en couche formée d'un matériau à base de fibres, et façonnée pour réaliser une zone utile filtrante de type à plis, caractérisé en ce que la zone utile est réalisée sur une partie centrale de la structure filtrante entourée par une bande périphérique non façonnée qui s'étend le long d'un pourtour de la zone utile et sur une largeur appropriée au logement du filtre, et en ce que la bande périphérique présente une rigidité sur une partie suffisante de sa longueur afin de constituer une armature de filtre.

Dans ces conditions, la présente invention permet de s'affranchir de la présence d'un cadre pour former l'armature du filtre.

Selon des modes de réalisation particuliers :

- la bande périphérique présente au moins un galbe de rigidification dans le sens de sa largeur et/ou au moins un dièdre de rigidification dans le sens de sa longueur ;

- la bande périphérique présente globalement, par rapport à un plan médian de la zone utile, une convexité apte à coopérer avec les parois d'un logement du filtre formé dans un circuit dans lequel circule le flux d'air, et une concavité du côté du filtre destiné à former une face amont en regard du flux d'air, de sorte que, en fonctionnement, le différentiel de pression entre chaque face du filtre repousse la bande périphérique contre les parois du logement pour parfaire l'étanchéité périphérique du filtre ;

- le filtre présente également au moins une zone de rigidification selon une orientation sensiblement linéaire traversant la zone utile et le long de laquelle les plis ont une amplitude sensiblement inférieure à celle, sensiblement constante, qu'ils présentent dans la zone utile ;

- la bande périphérique présente, sur au moins l'une de ces faces, un renfort couplé à la bande et constitué d'un matériau en couche du même type que la structure filtrante ;

- la bande périphérique possède une forme globalement rectangulaire qui présente, sur deux côtés opposés, une dissymétrie par rapport au plan médian de la zone utile, pour servir de moyen de détrompage lors du montage du filtre dans son logement ; et

- la bande périphérique est prolongée par au moins une languette destinée à être saisie pour faciliter le démontage du filtre.

L'invention concerne également un procédé de réalisation d'un tel filtre. Ce procédé consiste, dans un ordre quelconque ou simultanément, à façonner une zone centrale utile à la filtration dans une structure filtrante en couche, en laissant au moins une bande périphérique non façonnée, et à traiter mécaniquement une partie suffisante de la bande périphérique pour obtenir une rigidification apte à réaliser une armature de filtre.

Selon des modes de réalisation particuliers :

- le traitement mécanique est réalisé par formage et/ ou écrasement, et peut-être complété par un traitement thermique ;
- la rigidité de la bande périphérique est suffisante pour lui permettre de supporter élastiquement un moment de flexion assurant le maintien du filtre dans le logement d'un boîtier muni de parois de support de filtre par la pression que le filtre exerce en retour contre les parois dudit logement ; et
- les plis de la zone utile sont traités mécaniquement par écrasement le long d'au moins un axe transversal pour former une zone transversale de rigidification additionnelle.

Un autre objet de l'invention est une installation en continu destinée à mettre en oeuvre le procédé ci-dessus. Dans cette installation, le matériau filtrant se présente en bandeau et est débité sur un premier poste de façonnage de la zone utile, dans lequel le bandeau est traité par roulage entre deux tambours tournants dont les surfaces portent des crêtes pouvant s'engrener sur une portion centrale principale afin de former des plis dans cette portion en laissant le bandeau non façonné en bordure, puis sur un deuxième poste de rigidification et de découpe par déformation mécanique portant sur des portions du bandeau disposées en regard de bordures de matrices de mise en forme et de découpe.

Selon des modes particuliers de réalisation :

- les pliures des tambours tournants sont parallèles ou perpendiculaires aux axes de rotation des tambours ;
- une boucle de temporisation est formée après le poste de façonnage pour synchroniser les différentes opérations sans risque de décrochage ,
- le poste de rigidification et de découpage est divisé en deux postes, un poste de rigidification dans lequel deux matrices de mise en forme agissent par déformation mécanique, et un poste de découpage dans lequel deux matrices débitent les filtres selon une dimension prédéterminée ; et
- les matrices de déformation mécanique peuvent agir par formage et/ou écrasement sur les bordures du bandeau non façonnées et, en option, à mi-chemin des bordures, et/ou transversalement au bandeau, parallèlement et/ou perpendiculairement au sens de déplacement du bandeau.

D'autres caractéristiques et avantages ressortiront de la description détaillée qui suit, relative à des exemples de réalisation non limitatifs, en référence aux figures annexées qui représentent respectivement :

- la figure 1, une vue perspective d'un premier exemple de filtre à air selon l'invention ;
- la figure 2, une vue perspective d'un autre exemple de filtre selon l'invention munie d'une zone de rigidification, de bandes périphériques galbées et de languettes ;
- la figure 3, une vue partielle du filtre pourvu d'une zone de rigidification transversale et d'un renfort de bande périphérique ;
- la figure 4, une coupe transversale suivant le plan IV-IV de la figure 2, mettant en évidence la réalisation de la zone de rigidification et de deux bandes périphériques ;
- la figure 5, une vue en coupe partielle illustrant la mise en place d'un côté de bande périphérique dans une paroi du boîtier de logement du filtre ;
- les figures 6a à 6c, différents profils de bandes périphériques du filtre aptes à exercer une fonction de détrompage ; et
- la figure 7, une installation illustrant de manière schématique un exemple d'enchaînement des postes de mise en oeuvre du procédé selon l'invention.

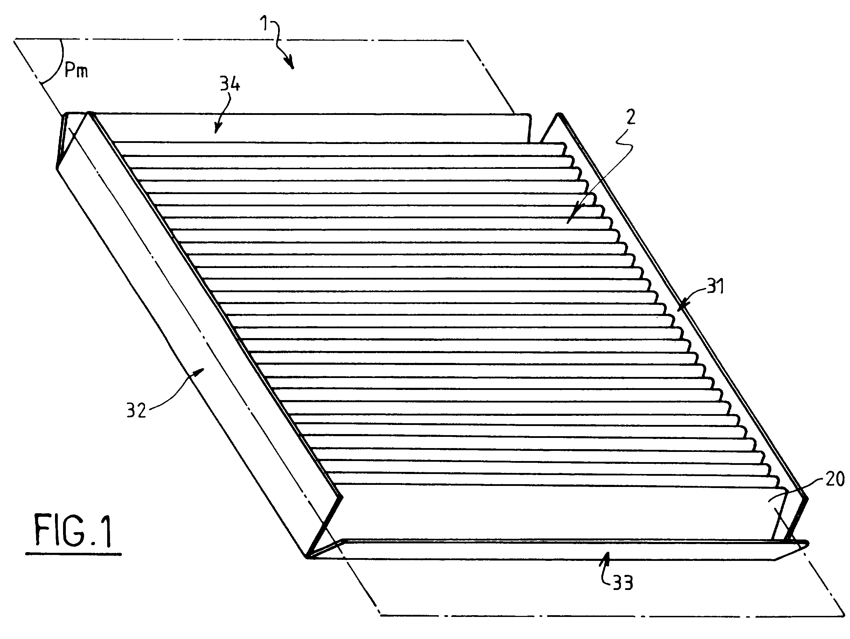

Comme il apparaît sur la vue perspective illustrée à la figure 1, un premier exemple de filtre 1 selon l'invention comporte une portion filtrante principale 2 constituée de plusieurs dizaines de plis 20. Le filtre est formé dans un matériau à fibres entrelacées de polycarbonate et de polyesther et les plis sont façonnés classiquement par matriçage.

La zone utile centrale 2 est prolongée par quatre bandes périphériques 31 à 34, disposées sur les quatre côtés de la zone centrale de forme globalement rectangulaire.. Dans ce premier exemple simplifié, les bandes périphériques 31 à 34 ont subi un écrasement et un formage par pliage selon des angles particuliers par rapport au plan médian Pm de la partie principale de filtre, plan médian passant à mi-hauteur des plis 20 : les bandes 31 et 32 sont perpendiculaires à ce plan et les bandes 33 et 34 forment un angle d'environ 45° par rapport à ce plan. Ces bandes sont destinées à être logées contre les parois planes d'un boîtier de logement.

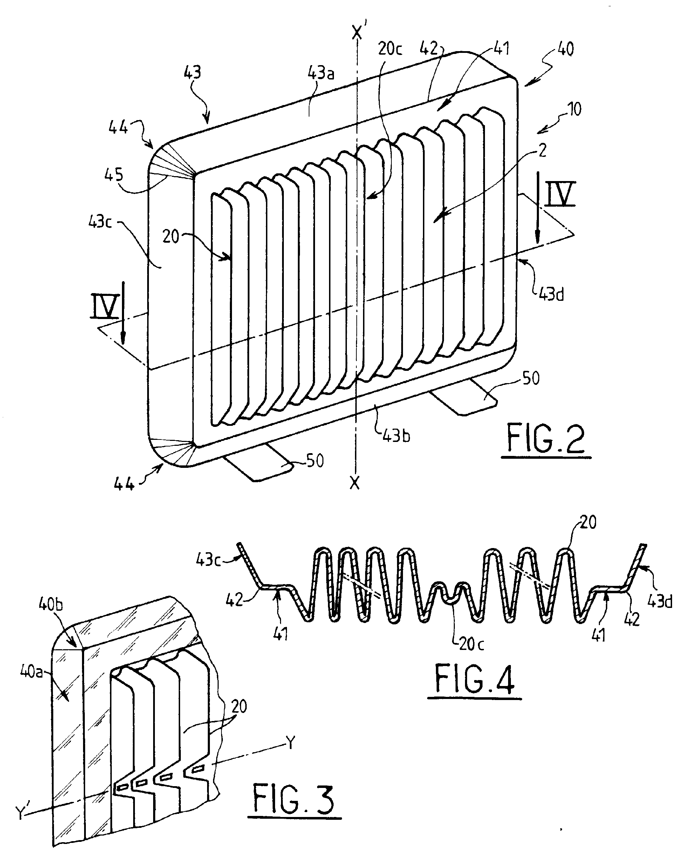

La figure 2 illustre un autre exemple de filtre 10 selon l'invention, comportant la partie centrale principale 2 formée des plis 20 constituant la zone utile à la filtration, et une bordure périphérique continue 40, prolongeant la zone centrale 2. Ce filtre est plus particulièrement destiné à être monté dans un boîtier de circuit de climatisation d'un véhicule automobile.

La bordure périphérique est constituée d'une portion 41 de forme sensiblement rectangulaire, disposée dans le plan médian Pm de la zone centrale 2 (figure 1), et d'une portion 43 repliée en arrière du plan médian. La bande périphérique 40 a subi un traitement mécanique de formage et d'écrasement, de manière à présenter un pli rectangulaire 42 formant un sommet de dièdre entre la portion rectangulaire 41 et la portion repliée 43, cette portion 43 étant également de forme globalement rectangulaire constituée principalement de quatre côtés, 43a à 43d.

Dans les zones de jonctions 44 entre les côtés de la portion 43, des micro-pliures 45 sont formées afin de faciliter la mise en forme du retrait de la portion de bande 43. Le traitement mécanique subi par la portion 43 forme également un galbe qui se traduit par des courbures 45 représentées sur la figure. L'un des côtés 43b de cette portion est prolongé par deux languettes 50. Ces languettes sont destinées à faciliter le démontage du filtre du logement du boîtier dans lequel il est habituellement installé.

Le pli central 20c a subi également un écrasement pour former une ligne de rigidification longitudinale X'X supplémentaire. En variante, comme représenté sur la figure 3, qui ne reprend qu'une vue partielle du filtre, une ligne de rigidification transversale selon l'axe Y'Y, perpendiculaire à l'axe X'X, est réalisée par écrasement de tous les plis en leur milieu.

En variante également, la bordure périphérique 40 est doublée à l'aide d'un renfort 40a de rigidification (figure 2a), formée d'une pièce prédécoupée dans le même matériau que le filtre, de taille équivalente à celle de la bordure 40, et rendue solidaire de celle-ci par tout moyen connu (collage, traitement mécanique en simultané avec la bordure 40 ou écrasement ultérieur). Le renfort 40a présente des échancrures 40b découpées dans les coins 44, afin de faciliter et conserver son installation.

Sur la figure 4, la vue en coupe suivant le plan IV-IV de la figure 2 met en évidence les plis 20 de la zone utile, l'écrasement du pli central 20c, ainsi que les bandes périphériques latérales 41-43c et 41-43d formant des dièdres de sommets constitués par la pliure 42 et d'angle adapté aux parois du boîtier d'accueil. En variante, plusieurs plis centraux sont écrasés pour augmenter la rigidité selon l'axe X'X.

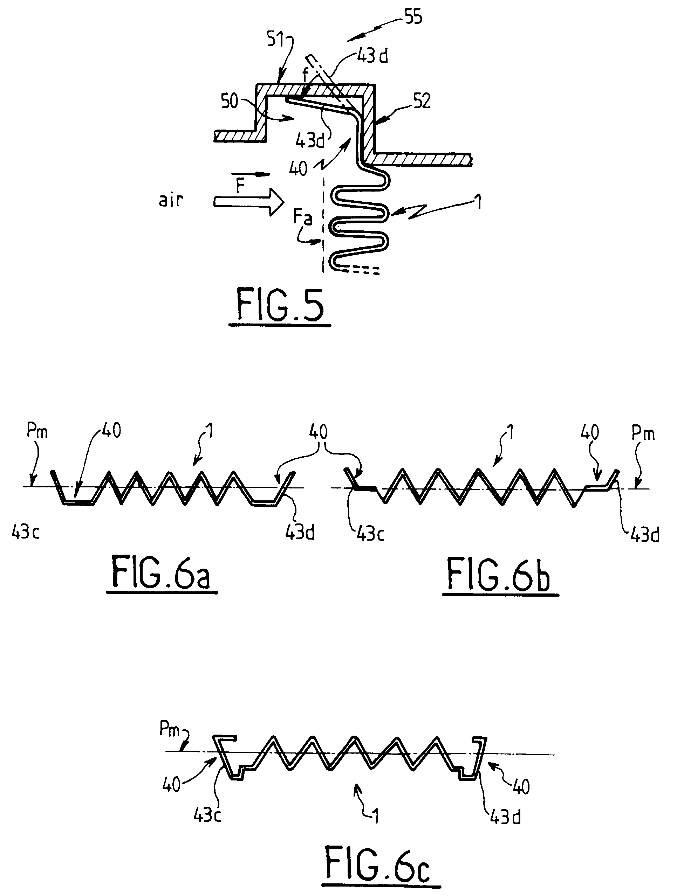

La mise en place du filtre dans le boîtier de logement est illustrée à la figure 5. Sur cette vue en coupe partielle, il apparaît que les deux côtés 43d-41 du dièdre de la bande périphérique 40 est dans un premier temps disposée approximativement dans le logement 50 limité par les parois 51 et 52 du boîtier 55. Le boîtier forme de manière similaire un logement (non représenté) pour l'autre dièdre 43c-41. Lorsque le flux d'air $\vec{F}$, est appliqué dans le circuit de climatisation, la pression exercée par ce flux sur la face amont $F_a$ (apparaissant en traits pointillés) du filtre 1 vient plier le côté 43d (respectivement 43c) du dièdre contre la paroi 50a (suivant la flèche $\vec{f}$), de sorte que les côtés 43d et 41 (respectivement 43c-41) viennent épouser les parois 51 et 52 du boîtier 55. La pression, qui peut atteindre 1000 Pa dans les conditions de fonctionnement, est réglée pour réaliser un tel positionnement. L'étanchéité du filtre est ainsi totalement assurée.

Les filtres présentent en général un sens de fonctionnement préférentiel par rapport au flux incident, tel que la face amont $F_a$ se présente au regard de ce flux. Ce sens préférentiel est respecté lorsqu'un moyen de détrompage permet de loger le filtre dans le boîtier conformément à ce sens et l'empêche de se loger lorsqu'il se présente dans le sens opposé. La bande périphérique 40 est rendue dissymétrique par rapport au plan médian de la zone principale du filtre, pour réaliser un tel moyen de détrompage.

Sur les vues en coupe des figures 6a à 6c, les bandes périphériques 40 présentent des dièdres formant des angles particuliers, de sorte qu'une dissymétrie apparaît pour les bandes périphériques 43c et 43d constituées par ces dièdres par rapport au plan médian Pm de la zone centrale 2. Ainsi, si le filtre se présente avec des faces amont et aval inversées, les bandes périphériques ne peuvent se loger dans le boîtier si bien que l'opérateur est à même immédiatement de positionner correctement le filtre.

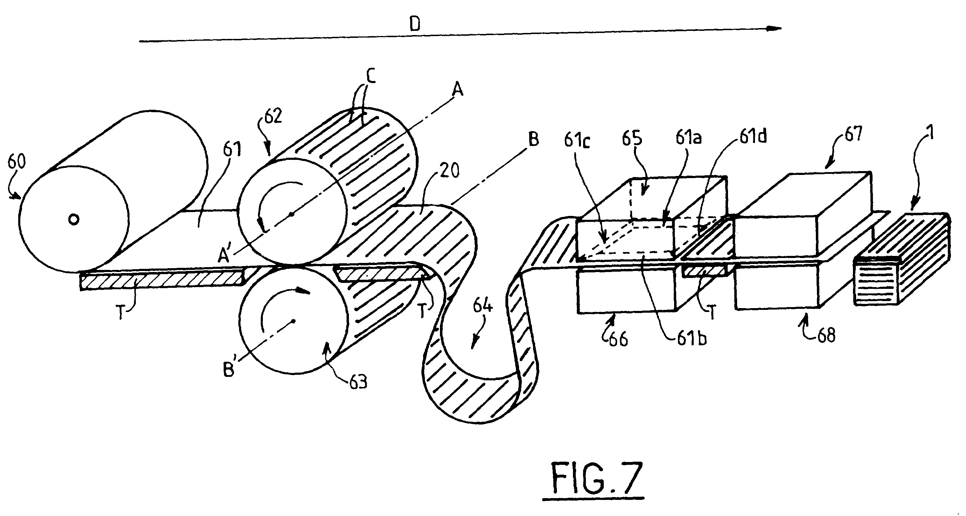

Afin de réaliser un filtre selon l'invention, la figure 7 illustre une installation comportant plusieurs postes de traitement mécanique, commandés par une unité centrale (non représentée). Le matériau filtrant en couche est déroulé sur un tapis roulant T à partir d'un rouleau de stockage 60. Le matériau 61 arrive en bandeau au premier poste, où les plis 20 sont formés par pression à l'aide de deux tambours rotatifs 62 et 63 tournant en sens inverse autour de deux axes parallèles, respectivement A'A et B'B. Ces tambours, disposés de part et d'autre du bandeau 61, présentent une surface constituée de crêtes adjacentes C, parallèles aux axes de rotation des tambours, et donc perpendiculaires à la direction d'avancement D du bandeau de matériau filtrant sur le tapis. Les crêtes ne s'étendent pas sur toute la largeur des tambours et laissent donc deux anneaux circulaires en bordure. En variante, les crêtes peuvent être disposées parallèlement au sens de déroulement du bandeau.

Le bandeau 61 est comprimé entre les crêtes complémentaires des deux tambours 62 et 63 pour former les plis 20 par déformation du bandeau dans une zone centrale, en laissant deux bandes latérales non déformées. Une boucle de temporisation 64 est formée entre le poste de formation des plis et le poste suivant de rigidification des bandes latérales. A ce poste de rigidification, deux matrices 65 et 66 sont disposées de part et d'autre du bandeau.

Les matrices présentent des surfaces de matriçage complémentaires en bordure pour réaliser, par pliage et écrasement, une rigidification de portions latérales 61a et 61b (en traits pointillés vus à travers la matrice 65) en bordure du bandeau 61, et de portions 61c et 61d (en traits pointillés vus à travers la matrice 65) à distance sur le bandeau 61, respectivement disposées selon le sens d'avancement D et selon l'axe des plis 20. Sous la pression exercée, le matériau présente des zones de rigidification au niveau de plis supplémentaires formés par le matriçage utilisé. Le matriçage est réalisé selon les techniques connus de l'homme de l'art.

En sortie de ce poste, le découpage selon une longueur prédéterminée du bandeau permet d'obtenir en série, des filtres de dimensions adaptées. Le découpage est réalisé par des découpeuseséjecteuses 67-68, disposées de part et d'autre du bandeau, dont les couperets sont déclenchés de manière prédéterminée afin d'obtenir la longueur de bandeau correspondant aux dimensions du filtre. Les vitesses de l'ensemble des outils utilisés et les instants de déclenchement sont gérés de manière centralisée par l'unité centrale programmable.

L'invention n'est pas limitée aux exemples de réalisation décrits et représentés. Il est par exemple possible de prévoir un seul poste de traitement pour former les plis, rigidifier les bords et découper les filtres. Par ailleurs, la bande périphérique du filtre peut avoir toute forme, par exemple circulaire ou elliptique, adaptée au logement destiné au filtre. De plus la rigidification peut être réalisée par une mise en forme autre que par pliage et/ou écrasement, par exemple par durcissement par traitement thermique ou étirage. La rigidification peut être réalisée sur tout ou partie de la bande périphérique, selon une ou plusieurs portions régulièrement réparties ou non le long de cette bande, par exemple une portion au centre de chaque côté et portant sur la moitié de sa longueur, pour que l'ensemble supporte le moment de flexion capable d'assurer le maintien du filtre dans son logement.

**Revendications**

1. Filtre à air comportant au moins une structure filtrante (61) en couche formée d'un matériau à base de fibres, et façonnée pour réaliser une zone utile filtrante (2) de type à plis (20), la zone utile **étant** réalisée sur une partie centrale de la structure filtrante entourée par une bande périphérique non façonnée (40) qui s'étend le long d'un pourtour de la zone utile (2) et sur une largeur appropriée au logement du filtre, la bande périphérique (40) **présentant** une rigidité sur une partie suffisante de sa longueur afin de constituer une armature de filtre, c**aractérisé en ce que** la bande périphérique (40) présente au moins un galbe de rigidification dans le sens de sa largeur et/ou au moins un dièdre (41 à 43) de rigidification dans le sens de sa longueur.

2. Filtre à air selon l'une des revendications précédentes, dans lequel la bande périphérique présente globalement, en retrait par rapport à un plan médian (Pm) de la zone utile (2), une convexité apte à coopérer avec les parois (51, 52) d'un logement (50) du filtre formé dans un circuit dans lequel circule le flux d'air ($\vec{F}$), et une concavité du côté du filtre destiné à former une face amont (Fa) en regard du flux d'air ($\vec{F}$), de sorte que, en fonctionnement, le différentiel de pression entre chaque face du filtre repousse la bande périphérique (40) contre les parois du logement pour parfaire l'étanchéité périphérique du filtre.

3. Filtre à air selon l'une quelconque des revendications précédentes, dans lequel le filtre présente au moins une zone de rigidification (X'X ; Y'Y) selon une orientation sensiblement linéaire traversant la zone utile (2) et le long de laquelle les plis (20 ; 20c) ont une amplitude sensiblement inférieure à celle, sensiblement constante, qu'ils présentent dans la zone utile.

4. Filtre à air selon l'une quelconque des revendications précédentes, dans lequel la bande périphérique (40) présente, sur au moins l'une de ces faces, un renfort (40a) couplé à la bande et constitué d'un matériau en couche du même type que la structure filtrante.

5. Filtre à air selon l'une quelconque des revendications précédentes, dans lequel la bande périphérique (40) possède une forme globalement rectangulaire qui présente, sur deux côtés opposés (43c, 43d) une dissymétrie par rapport au plan médian (Pm) de la zone utile (2), pour servir de moyen de détrompage lors du montage du filtre dans son logement.

6. Filtre à air selon l'une quelconque des revendications précédentes, dans lequel la bande périphérique est prolongée par au moins une languette (50) destinée à être saisie pour faciliter le démontage du filtre.

7. Procédé de réalisation d'un filtre selon l'une quelconque des revendications précédentes, **consistant** dans un ordre quelconque ou simultanément, à façonner une zone centrale utile à la filtration (2) dans une structure filtrante en couche (61), en laissant au moins une bande périphérique non façonnée, et à traiter mécaniquement une partie suffisante de la bande périphérique pour obtenir une rigidification apte à réaliser une armature de filtre, **caractérisé en ce que la bande périphérique est façonnée pour présenter au moins un galbe de rigidification et/ou au moins un dièdre de rigidification.**

8. Procédé de réalisation d'un filtre selon la revendication **7**, dans lequel le traitement mécanique est réalisé par formage et/ou écrasement.

9. Procédé de réalisation d'un filtre selon la revendication **8**, dans lequel le traitement mécanique est complété par un traitement thermique.

10. Procédé de réalisation d'un filtre selon l'une quelconque des revendications **7 à 9**, dans lequel la rigidité de la bande périphérique (40) est suffisante pour lui permettre de supporter élastiquement un moment de flexion assurant le maintien du filtre (1 ) dans le logement (50) d'un boîtier (55) muni de parois (51, 52) de support de filtre par la pression que le filtre exerce en retour contre les parois dudit logement.

11. Procédé de réalisation d'un filtre selon l'une quelconque des revendications **7 à 9**, dans lequel au moins un pli (20, 20c) de la zone utile (2) sont traités mécaniquement par écrasement le long d'au moins un axe (X'X, Y'Y) traversant la zone utile pour former une zone de rigidification additionnelle.

12. Installation en continu destinée à mettre en oeuvre le procédé selon l'une quelconque des revendications 7 **à 11**, dans laquelle le matériau filtrant se présente en bandeau (61) et est débité sur un premier poste de façonnage de la zone utile (2), dans lequel le bandeau est traité par roulage entre deux tambours tournants (62, 63) dont les surfaces portent des crêtes (C) pouvant s'engrener et formées sur une portion centrale principale afin de former des plis (20) par déformation dans cette portion en laissant un bandeau non façonné en bordure, puis sur un deuxième poste de rigidification et de découpe par déformation mécanique portant sur des portions du bandeau disposées en regard de bordures de matrices de mise en forme et de découpe(65 à 68).

13. Installation selon la revendication **12**, dans laquelle les crêtes des tambours tournants (62, 63) sont parallèles aux axes de rotation (A'A, B'B) des tambours ou perpendiculaires;

14. Installation selon la revendication **12**, dans laquelle les crêtes des tambours tournants (62, 63) sont perpendiculaires aux axes de rotation (A'A, B'B) des tambours.

15. Installation selon l'une quelconque des revendications **12** à **14**, dans laquelle une boucle de temporisation (64) est formée après le poste de façonnage pour synchroniser les différentes opérations sans risque de décrochage.

16. Installation selon l'une quelconque des revendications **12** à **14**, dans laquelle le poste de rigidification et de découpage est divisé en deux postes, un poste de rigidification dans lequel deux matrices de mise en forme (65, 66) agissent par déformation mécanique, et un poste de découpage dans lequel deux matrices (67, 68) débitent les filtres selon une dimension prédéterminée.

17. Installation selon la revendication **16**, dans laquelle les matrices de déformation mécanique (65, 66) agissent par formage et/ou écrasement sur les bordures non façonnées (61a, 61b) du bandeau (61) parallèlement et/ou perpendiculairement au sens de déplacement (D) du bandeau (61).

18. Installation selon l'une revendications **16** ou **17**, dans laquelle les matrices de déformation mécanique (65, 66) agissent à mi-chemin des bordures (61a, 61b) et/ou transversalement (61c, 61d) au bandeau (61).

FIG.1

EP 1 106 231 A1

FIG.2

FIG.4

FIG.3

8

FIG.5

FIG.6a

FIG.6b

FIG.6c

FIG.7

EP 1 106 231 A1

Office européen
des brevets

**RAPPORT DE RECHERCHE EUROPEENNE**

Numéro de la demande

EP 00 12 6469

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 692 294 A (NIPPONDENSO CO) 17 janvier 1996 (1996-01-17) * revendications 1,14,15,19; figures 1-4 * --- | 1,4,5,7 | B01D46/52 B31D5/04 |
| A | US 4 386 948 A (P.V.CHOKSI ET AL.) 7 juin 1983 (1983-06-07) * revendications 1,5; figures 1,6 * --- | 1 | |
| A | US 4 181 070 A (A.M.ROBBINS ET AL.) 1 janvier 1980 (1980-01-01) * le document en entier * --- | 7,12 | |
| A | US 4 288 278 A (H.AKAO) 8 septembre 1981 (1981-09-08) * revendication 1; figures 2,4 * ----- | 7,12 | |

**DOMAINES TECHNIQUES RECHERCHES (Int.Cl.7)**

B01D
B31D

Le présent rapport a été établi pour toutes les revendications

| Lieu de la recherche | Date d'achèvement de la recherche | Examinateur |
|---|---|---|
| BERLIN | 31 janvier 2001 | Bertram, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**    EP 00 12 6469

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2001

| Document brevet cité au rapport de recherche | | Date de publication | Membre(s) de la famille de brevet(s) | | Date de publication |
|---|---|---|---|---|---|
| EP 692294 | A | 17-01-1996 | JP | 8024546 A | 30-01-1996 |
| | | | JP | 8038834 A | 13-02-1996 |
| | | | AT | 171643 T | 15-10-1998 |
| | | | CN | 1128174 A | 07-08-1996 |
| | | | DE | 69505062 D | 05-11-1998 |
| | | | DE | 69505062 T | 12-05-1999 |
| | | | US | 5674302 A | 07-10-1997 |
| | | | US | 5993580 A | 30-11-1999 |
| | | | ZA | 9505211 A | 14-02-1996 |
| US 4386948 | A | 07-06-1983 | AUCUN | | |
| US 4181070 | A | 01-01-1980 | CA | 1100153 A | 28-04-1981 |
| US 4288278 | A | 08-09-1981 | JP | 1265098 C | 27-05-1985 |
| | | | JP | 55152502 A | 27-11-1980 |
| | | | JP | 59040047 B | 27-09-1984 |
| | | | JP | 1280057 C | 13-09-1985 |
| | | | JP | 55079009 A | 14-06-1980 |
| | | | JP | 60003843 B | 31-01-1985 |

EPO FORM P0460

Pour tout renseignement concernant cette annexe : voir Journal Officiel de l'Office européen des brevets, No.12/82